# EUROPEAN PATENT APPLICATION

(11) **EP 3 424 998 A1**
(43) Date of publication of application: **09.01.2019**
(21) Application number: 17760181.2
(22) Date of filing: 03.03.2017
(51) Int. Cl.: C08L 9/00, B32B 7/12, B32B 25/04, B65G 15/32, C08K 3/04, C08K 3/26, C08K 3/36, C08L 7/00, C08L 9/06, F16G 1/08

(54) **RUBBER COMPOSITION, LAMINATE BODY, AND CONVEYER BELT**

(30) Priority: 04.03.2016 JP 2016041852
(71) Applicant: Bridgestone Corporation, Tokyo 104-8340 (JP)
(72) Inventor: TAKANO Genho, Tokyo 104-8340 (JP); TSUNENISHI Youhei, Tokyo 104-8340 (JP); AKAMA Shuyo, Tokyo 104-8340 (JP)
(74) Representative: Lang, Johannes
(86) International application number: PCT/JP2017/008576
(87) International publication number: WO 2017/150719

(57) **Abstract**

Provided is a high-productivity rubber composition having excellent adhesiveness to a reinforcing member, particularly a reinforcing member in environmental degradation, and capable of bringing high peel operability therewith. The rubber composition is obtainable by compounding a rubber component containing a diene based rubber, a wet silica, a carbon black and a calcium carbonate, wherein: a compounding amount of the wet silica is 3 parts by mass or more and less than 5 parts by mass per 100 parts by mass of the diene based rubber; and a compounding amount of the calcium carbonate is 10 parts by mass or more and 120 parts by mass or less per 100 parts by mass of the diene based rubber.

## Description

### TECHNICAL FIELD

This disclosure relates to a rubber composition, a laminated body, and a conveyor belt.

### BACKGROUND

For the purpose of reinforcing a rubber member to improve strength thereof, reinforcing members, including an organic fiber such as polyethylene terephthalate and nylon, which is untreated or dipped with an adhesive component such as resorcin-formaldehyde-latex (RFL), etc. on its surface, and/or an inorganic fiber such as steel cord, and the like, are used for rubber products required to have strength, such as tires for automobiles, conveyor belts, and hoses.

In manufacture of such rubber product, such reinforcing member and rubber member and/or such reinforcing members themselves are occasionally adhered to one another through an adhesive containing a rubber composition. For example, conveyor belts are frequently used as item transportation means in various industrial fields, and thus are required to have high durability capable of withstanding friction and impact from transported items. Therefore, they are ordinarily manufactured by: preparing one or more layers of reinforcing member, and cover rubbers as rubber members; laminating them via an adhesive containing a rubber composition such that the cover rubbers become the upper and lower outermost layers; and then performing vulcanization adhesion. In such situation, in order to obtain high reinforcing effect, desired is a rubber composition capable of exhibiting high adhesiveness between reinforcing members and high adhesiveness between a rubber member and a reinforcing member.

For example, in use of a conveyor belt, there are cases that after manufacture of one layered belt including a layer containing a rubber composition and a reinforcing member layer, a processing (so-called endless processing) is performed to peel off a part of the layers at both ends thereof, and to adhere the ends to each other with an endless adhesive and/or an endless adhesive rubber, etc. The adhered both ends (endless portion) are required to have high durability in actual use, and it is particularly important that the members in the endless portion, particularly the reinforcing members, are firmly adhered.

Here, from a viewpoint of adhesiveness between a rubber member using a rubber composition and a reinforcing member, for example, JPH06-306211A (PTL1) discloses that a rubber manufacturable from a rubber composition containing 0.5 parts to 10 parts by mass of N,N'-m-phenylene bismaleimide, 0.3 parts to 3 parts by mass of a carboxylic acid which is divalent or more or an anhydride thereof, and 0.3 to 10 parts by mass of a compound that generates formaldehyde when heated, per 100 parts by mass of a rubber such as natural rubber and styrene butadiene rubber, has excellent vulcanization adhesion performance to a reinforcing member.

### CITATION LIST

### Patent Literature

PTL1: JPH06-306211A

### SUMMARY

### (Technical Problem)

However, our study discovered that there is a problem that even if the aforementioned conventional rubber composition is adhered to a reinforcing member, its adhesiveness is deteriorated because of environmental degradation of the reinforcing member due to transportation process, storage process, manufacture process, etc. In particular, we discovered as well that in the case of manufacturing a layered belt by laminating a plurality of layers containing the aforementioned conventional rubber composition and one or more of the reinforcing member layers, when its endless portion is peeled off, its peel strength becomes insufficient, and the amount of the rubber composition remaining on the reinforcing members is small. Therefore, there is a risk that the reinforcing members are not adhered to one another firmly enough, and are incapable of bringing high durability to the conveyor belt, which leaves room for improving such rubber composition.

On the other hand, when performing an operation peeling off a layer containing a rubber composition from a reinforcing member layer, such as the aforementioned endless processing, it is important that peel can be performed readily at some degree, and the aforementioned conventional rubber composition is required to have high peel operability as well.

It thus would be helpful to provide a high-productivity rubber composition having excellent adhesiveness to a reinforcing member, particularly a reinforcing member in environmental degradation, capable of bringing high peel operability therewith. It would also be helpful to provide a high-productivity laminated body using the aforementioned rubber composition and capable of improving durability of a rubber product, and a high-productivity conveyor belt using the aforementioned laminated body and having high durability.

### (Solution to Problem)

As a result of intensive study in order to achieve the aforementioned purpose, we discovered that by compounding a specific compound at a specific amount to a rubber component containing a diene based rubber, it is possible to obtain, at a high productivity, a rubber composition having excellent adhesiveness to a reinforcing member, particularly a reinforcing member in environmental degradation, and capable of bringing high peel operability therewith.

The disclosed rubber composition is a rubber composition obtainable by compounding a rubber component containing a diene based rubber, a wet silica, a carbon black and a calcium carbonate, wherein:
a compounding amount of the wet silica is 3 parts by mass or more and less than 5 parts by mass per 100 parts by mass of the diene based rubber; and
a compounding amount of the calcium carbonate is 10 parts by mass or more and 120 parts by mass or less per 100 parts by mass of the diene based rubber.

The disclosed laminated body is obtainable by laminating and adhering a layer containing the disclosed rubber composition and a reinforcing member layer.

The disclosed conveyor belt contains the disclosed laminated body.

### (Advantageous Effect)

According to this disclosure, it is possible to provide a high-productivity rubber composition having excellent adhesiveness to a reinforcing member, particularly a reinforcing member in environmental degradation, and capable of bringing high peel operability therewith. Further, according to this disclosure, it is possible to provide a high-productivity laminated body using the aforementioned rubber composition and capable of improving durability of a rubber product, and a high-productivity conveyor belt using the aforementioned laminated body and having high durability.

### BRIEF DESCRIPTION OF THE DRAWINGS

In the accompanying drawings:
FIGS. 1A and 1B schematically illustrate a peeled surface in a peel test on a layer containing the disclosed rubber composition and a reinforcing member layer;
FIGS. 2A and 2B schematically illustrate a peeled surface in a peel test on a layer containing a rubber composition of a comparative example and a reinforcing member layer; and
FIGS. 3A and 3B schematically illustrate a peeled surface in a peel test on a layer containing a rubber composition of another comparative example and a reinforcing member layer.

### DETAILED DESCRIPTION

### <Rubber composition>

The following describes one of the disclosed embodiments in detail.

The disclosed rubber composition is obtainable by compounding at least a rubber component containing a diene based rubber, a wet silica, a carbon black and a calcium carbonate, and further compounding other components if necessary.

### (Rubber component)

The disclosed rubber composition needs to contain a diene based rubber as a rubber component. The diene based rubber is capable of exhibiting performances such as high elasticity and high heat resistance via vulcanization. The diene based rubber is not specifically limited and may be appropriately selected depending on the purpose. Examples include natural rubber (NR); and diene based synthetic rubbers such as butadiene rubber (BR), styrene-butadiene rubber (SBR), isoprene rubber (IR), chloroprene rubber (CR), ethylene-propylene-diene rubber (EPDM), acrylonitrile-butadiene rubber (NBR) and butyl rubber (IIR). These may be used singly or in combination of two or more.

In particular, the disclosed rubber composition preferably contains a natural rubber and a styrene-butadiene rubber, from a viewpoint of improving adhesiveness to a reinforcing member.

In the case where the disclosed rubber composition contains a diene based synthetic rubber such as styrene-butadiene rubber, a cis-1,4 bond content in a diene monomer unit constituting the synthetic rubber is preferably 98% or less, and more preferably 90% or less, from a viewpoint of adhesiveness, and a viewpoint of obtaining appropriate operability without excessively high viscosity during processing in an unvulcanized state. Such cis-1,4 bond content may be measured by using, for example, ¹H-NMR spectrum and ¹³C-NMR spectrum.

The ratio of the diene based rubber in the rubber component of the disclosed rubber composition is not specifically limited and may be appropriately selected depending on the purpose, but is preferably 80 mass% or more, more preferably 90 mass% or more, particularly preferably 100 mass%. The ratio of the diene based rubber in the rubber component of 80 mass% or more improves adhesiveness between the obtained rubber composition and a reinforcing member is improved, improves durability of a rubber product using a laminated body of a layer containing the rubber composition and a reinforcing member layer.

In the case of using both a natural rubber and a styrene-butadiene rubber as the diene based rubber, the ratio of the compounding amount of the natural rubber to the total compounding amount of the natural rubber and the styrene-butadiene rubber is preferably 20 mass% or more, and preferably 60 mass% or less. The ratio of the compounding amount of the natural rubber of 20 mass% or more improves the mechanical strength of a rubber member or rubber product using the obtained rubber composition, and on the other hand, the ratio of the compounding amount of the natural rubber of 60 mass% or less improves wear resistance and film thickness stability of a rubber member or rubber product using the obtained rubber composition. From the same viewpoint, the ratio of the compounding amount of the natural rubber to the total compounding amount of the natural rubber and the styrene-butadiene rubber is more preferably 30 mass% or more, and more preferably 50 mass% or less.

Moreover, in the case of using both a natural rubber and a styrene-butadiene rubber as the diene based rubber, the ratio of the compounding amount of the styrene-butadiene rubber to the total compounding amount of the natural rubber and the styrene-butadiene rubber is preferably 40 mass% or more, and preferably 80 mass% or less. The ratio of the compounding amount of the styrene-butadiene rubber of 40 mass% or more improves aging resistance of a rubber member or rubber product using the obtained rubber composition, and on the other hand, the ratio of the compounding amount of the styrene-butadiene rubber of 80 mass% or less improves flex cracking resistance of a rubber member or rubber product using the obtained rubber composition. From the same viewpoint, the ratio of the compounding amount of the styrene-butadiene rubber to the total compounding amount of the natural rubber and the styrene-butadiene rubber is more preferably 50 mass% or more, and more preferably 70 mass% or less.

Other than the diene based rubber, the disclosed rubber composition may also contain a non-diene based rubber (a rubber component other than diene based rubber) as the rubber component, and may use a non-diene based rubber ordinarily used in rubber products without being specifically limited.

Moreover, in the disclosed rubber composition, a reclaimed rubber containing a diene based rubber and optionally a non-diene based rubber may be used. In the case of using a reclaimed rubber in the disclosed rubber composition, the compounding amount of the reclaimed rubber may preferably be determined such that a polymer component in the reclaimed rubber is 20 mass% or less with respect to the total amount of compounded polymers, from a viewpoint of sufficiently ensuring quality of a rubber product using the obtained rubber composition.

### (Wet silica)

The disclosed rubber composition needs to contain a wet silica. The wet silica may be obtained by, for example, using sodium silicate as a raw material, neutralizing its water solution to precipitate silica, filtering, and drying. The wet silica is classified into precipitated silica and gel process silica, both of which may be used. By using the wet silica in the rubber composition, it is possible to improve adhesiveness between such rubber composition and a reinforcing member such as organic fiber, particularly a reinforcing member in environmental degradation. The reason has not been clarified, but it is considered that the unique high polarity of wet silica contributes to improvement of adhesiveness. The wet silica may be used singly or in combination of two or more.

The nitrogen adsorption BET specific surface area (N₂SA) of the wet silica used in the disclosed rubber composition is not specifically limited and may be appropriately selected depending on the purpose, but is preferably 80 m²/g or more. The nitrogen adsorption BET specific surface area of the wet silica of 80 m²/g or more raises polarity of the rubber composition, further improves adhesiveness between the rubber composition and a reinforcing member, and suppresses deterioration of the peel operability when peeling off a layer containing this rubber composition from a reinforcing member layer in environmental degradation. From the same viewpoint, the nitrogen adsorption BET specific surface area of the wet silica is more preferably 120m²/g or more, even more preferably more than 150 m²/g, further preferably more than 200 m²/g.

The nitrogen adsorption BET specific surface area of the wet silica may be measured according to ISO5794-1.

The average primary particle size of the wet silica used in the disclosed rubber composition is not specifically limited and may be appropriately selected depending on the purpose, but is preferably 10 nm or more. The average primary particle size of the wet silica of 10 nm or more suppresses reduction of the productivity due to scattering, etc. during kneading.

The average primary particle size of the wet silica may be determined via calculation by using, for example, transmission electron microscope electron microscope image and/or BET specific surface area. Examples of the method for calculating the BET specific surface area include conventionally well-known methods, such as "Nanomaterial Information Provision Sheet: Amorphous Colloidal Silica (as of March, 2011) Reference 6." published by METI.

The compounding amount of the wet silica in the disclosed rubber composition is not specifically limited as long as it is 3 parts by mass or more and less than 5 parts by mass per 100 parts by mass of the diene based rubber, but is preferably 4 parts by mass or more. If the compounding amount of the wet silica in the rubber composition is less than 3 parts by mass per 100 parts by mass of the diene based rubber, there is a risk that the improvement effect of adhesiveness to a reinforcing member due to the compounded wet silica, particularly a reinforcing member degraded due to exposure to atmosphere, is insufficient. The compounding amount of the wet silica in the rubber composition of 4 parts by mass or more per 100 parts by mass of the diene based rubber obtains a rubber composition with sufficiently high adhesiveness to a reinforcing member, particularly a reinforcing member degraded due to exposure to atmosphere. On the other hand, the compounding amount of the wet silica in the rubber composition of 5 parts by mass or more per 100 parts by mass of the diene based rubber excessively increases the time needed for vulcanization of the rubber composition, which deteriorates productivity.

### (Carbon black)

The disclosed rubber composition needs to contain a carbon black. The carbon black, as a reinforcing filler, has a function of improving the modulus and the wear resistance of the rubber composition, and appropriately improving adhesiveness between this rubber composition and a reinforcing member, particularly a reinforcing member in environmental degradation. The carbon black may be used singly or in combination of two or more.

The nitrogen adsorption BET specific surface area (N₂SA) of the carbon black used in the disclosed rubber composition is not specifically limited and may be appropriately selected depending on the purpose, but is preferably 8 m²/g or more, and preferably 100 m²/g or less. The nitrogen adsorption BET specific surface area of the carbon black of 8 m²/g or more ensures the peel strength between the rubber composition and a reinforcing member, particularly a reinforcing member in environmental degradation, and ensures sufficient reinforcement performance. Moreover, the nitrogen adsorption BET specific surface area of the carbon black of 100 m²/g or less sufficiently suppresses deterioration of peel operability when peeling off a layer containing this rubber composition from a reinforcing member layer, obtains sufficient productivity such as scattering resistance and rollability during manufacture, and simultaneously ensures high dispersibility in the rubber composition during kneading. From the same viewpoint, the nitrogen adsorption BET specific surface area of the carbon black is more preferably 25 m²/g or more, and more preferably 90 m²/g or less.

The nitrogen adsorption BET specific surface area of the carbon black may be measured with, for example, a conventionally publicly-known method.

The compounding amount of the carbon black in the disclosed rubber composition is not specifically limited and may be appropriately selected depending on the purpose, but is preferably 10 parts by mass or more and preferably 100 parts by mass or less per 100 parts by mass of the diene based rubber. The compounding amount of the carbon black in the rubber composition of 10 parts by mass or more per 100 parts by mass of the diene based rubber suppresses deterioration of the peel strength between this rubber composition and a reinforcing member, particularly a reinforcing member in environmental degradation. Moreover, the compounding amount of the carbon black in the rubber composition of 100 parts by mass or less per 100 parts by mass of the diene based rubber improves the operability when peeling off a layer containing this rubber composition from a reinforcing member layer, for example, during endless processing of the conveyor belt. From the same viewpoint, the compounding amount of the carbon black in the rubber composition is more preferably 30 parts by mass or more, and more preferably 50 parts by mass or less per 100 parts by mass of the diene based rubber.

In the disclosed rubber composition, the total compounding amount of the aforementioned wet silica and carbon black is preferably 30 parts by mass or more, and preferably 80 parts by mass or less per 100 parts by mass of the diene based rubber. The total compounding amount of the wet silica and the carbon black of 30 parts by mass or more per 100 parts by mass of the diene based rubber obtains a rubber composition with excellent peel strength with a reinforcing member, particularly a reinforcing member degraded due to exposure to atmosphere, and sufficiently high adhesiveness to the reinforcing member. Moreover, the total compounding amount of the wet silica and the carbon black of 80 parts by mass or less per 100 parts by mass of the diene based rubber suppresses reduction of the productivity of a rubber product using such rubber composition due to excessively long time needed for vulcanization, and suppresses deterioration of the operability when peeling off a layer containing this rubber composition from a reinforcing member layer, for example, during endless processing of the conveyor belt. From the same viewpoint, the total compounding amount of the wet silica and the carbon black in the rubber composition is more preferably 40 parts by mass or more, and more preferably 55 parts by mass or less per 100 parts by mass of the diene based rubber.

### (Calcium carbonate)

The disclosed rubber composition needs to contain a calcium carbonate. The calcium carbonate has a function of reducing breaking resistance of the rubber composition to thereby improve adhesiveness of the rubber composition with a reinforcing member such as organic fibers and other rubber members, and has a function of improving the peel operability of the rubber composition and the reinforcing member. The calcium carbonate may be used singly or in combination of two or more.

The average primary particle size of the calcium carbonate used in the disclosed rubber composition is not specifically limited and may be appropriately selected depending on the purpose, but is preferably 0.5 µm or more. The average primary particle size of the calcium carbonate of 0.5 µm or more sufficiently improves adhesiveness between the rubber composition and a reinforcing member, particularly a reinforcing member in environmental degradation.

Moreover, the average primary particle size of the calcium carbonate is more preferably 0.8 µm or more, and more preferably 13 µm or less. The average primary particle size of the calcium carbonate of 0.8 µm or more suppresses rise of viscosity of unvulcanized rubber composition, and brings stable film thickness stability. Moreover, the average primary particle size of the calcium carbonate of 13 µm or less suppresses deterioration of the modulus and tear strength of vulcanized rubber composition, obtains stable reinforcing effect, and improves the peel strength. From the same viewpoint, the average primary particle size of the calcium carbonate is more preferably 1.0 µm or more, further more preferably 2.0 µm or more, and more preferably 12.0 µm or less.

The average primary particle size of the calcium carbonate may be measured by, for example, observing with a scanning electron microscope.

The calcium carbonate used in the disclosed rubber composition may use a calcium carbonate subjected to surface treatment by using an organic material if necessary, in order to obtain excellent dispersity in the rubber composition.

The compounding amount of the calcium carbonate in the disclosed rubber composition needs to be 10 parts by mass or more and 120 parts by mass or less per 100 parts by mass of the diene based rubber. If the compounding amount of the calcium carbonate in the rubber composition is less than 10 parts by mass per 100 parts by mass of the diene based rubber, there is a risk of cost increase of the rubber composition, a risk of deterioration of the operability due to close contact with a bumbary, a roll, etc. caused by excessively low viscosity of unvulcanized rubber composition, and a risk of deterioration of the operability when peeling off the rubber composition from the reinforcing member due to excessively high cohesion tearing force of the rubber composition. Further, if the compounding amount of the calcium carbonate in the rubber composition is more than 120 parts by mass per 100 parts by mass of the diene based rubber, there is a risk of excessive decrease of a cohesion tearing force of the rubber composition and insufficient peel strength between the rubber composition and a reinforcing member, a risk of deterioration of the productivity during rolling which uses a roll due to unvulcanized rubber composition floating from a roll and thus is not provided with sufficient shearing heat, and a risk of insufficient dispersity in the rubber composition during kneading using a Banbury mixer, a Brabender mixer, a kneader, etc. From the same viewpoint, the compounding amount of the calcium carbonate in the rubber composition is preferably 20 parts by mass or more, and preferably 100 parts by mass or less.

### (Other components)

In the disclosed rubber composition, other than the aforementioned rubber component, wet silica, carbon black and calcium carbonate, compounding ingredients ordinarily used in the rubber industry, for example, a vulcanizing agent such as sulfur, a vulcanization accelerator, a vulcanization accelerator aid such as zinc oxide, a softener, an age resistor, an antiscorching agent, a processing aid, a lubricant, a silica other than the aforementioned wet silica such as dry silica, a filler other than carbon black and calcium carbonate, a filler modifier, a tackifier, a colorant, etc. may be used appropriately depending on the purpose.

In the case of using sulfur as a vulcanizing agent to the disclosed rubber composition, its compounding amount is preferably 1.5 parts by mass or more and 3 parts by mass or less per 100 parts by mass of the diene based rubber, from a viewpoint of effectively vulcanization at a minimum necessary amount.

### (Preparation of rubber composition)

The disclosed rubber composition may be prepared by, for example, kneading the aforementioned components by using a Banbury mixer, a Brabender mixer, a kneader, etc.

A rubber composition prepared in this way has the following features. Namely, in the case of adhering such rubber composition and a reinforcing member, particularly a reinforcing member in environmental degradation, and then peeling off the same, it is possible to obtain high peel strength. Moreover, in the case of adhering such rubber composition and a reinforcing member, particularly a reinforcing member in environmental degradation, and then peeling off the same, the amount of the rubber composition remaining on the reinforcing member is more. Further, due to these features, the disclosed rubber composition can be said as having excellent adhesiveness to a reinforcing member such as organic fibers, particularly a reinforcing member in environmental degradation, and may be preferably used in manufacture of rubber products such as tires for automobiles, conveyor belts, and hoses. Specifically, when manufacturing a rubber product, it is possible to arrange this rubber composition between reinforcing members, or between a rubber member and a reinforcing member, to firmly adhere these members. In other words, the disclosed rubber composition may be used as an adhesive rubber composition. This rubber composition may be used, for example, to a conveyor belt in a layered shape, by laminating with reinforcing member layers. Furthermore, during endless processing of such conveyor belt, after peeling off reinforcing members from each other or peeling off a rubber member from a reinforcing member adhered by the aforementioned rubber composition, and then re-adhering these by using a rubber for endless adhesion, it is possible to perform firm adhesion.

The "rubber member" herein refers to any member containing at least a rubber component for use in manufacture of a rubber product.

### <Laminated body>

The disclosed laminated body is obtainable by laminating and adhering at least a layer containing the disclosed rubber composition (hereinafter also referred to as "the present rubber composition layer") and a reinforcing member layer to each other. In other words, the disclosed laminated body is obtainable by laminating and adhering the present rubber composition layer and the reinforcing member layer to each other. Such laminated body has the layer containing the rubber composition and the reinforcing member layer, which are firmly adhered to each other, and thus is capable of improving durability of a rubber product, and has high productivity. The disclosed laminated body is inclusive of a laminated body obtainable by alternately laminating and adhering a plurality of the present rubber composition layers and one or a plurality of the reinforcing member layers to one another, and is also inclusive of a laminated body obtainable by laminating and adhering the present rubber composition layer onto both sides of a reinforcing member layer, and further laminating two or more of a product obtained thereby. Moreover, in addition to a layer containing the disclosed rubber composition, the disclosed laminated body may also include a rubber layer other than a layer containing the disclosed rubber composition.

### (The present rubber composition layer)

The present rubber composition layer may be one obtainable by shaping the disclosed rubber composition into a sheet-like shape by using an apparatus such as a rolling roll and an extruder.

The thickness of the present rubber composition layer is not specifically limited and may be appropriately selected depending on the purpose, but is preferably 0.2 mm or more and 2 mm or less, from a viewpoint of suppression of rubber breakage during molding, and a viewpoint of thinning. In the case of using a plurality of the present rubber composition layers, thickness of each present rubber composition layer may be either identical or different.

### (Reinforcing member layer)

The reinforcing member layer has a function of improving the reinforcement performance of rubber products such as tires for automobiles, conveyor belts, and hoses. Here, the reinforcing member layer is not particularly limited and may be appropriately selected depending on the purpose. The reinforcing member layer as an adhesion target of the present rubber composition layer is particularly preferably a layer including an organic fiber (hereinafter also referred to as "organic fiber layer"), more preferably a canvas layer formed of an organic fiber. The term "canvas" herein refers to a textile obtained by weaving fibers.

The material of the organic fiber is not specifically limited and may be appropriately selected depending on the purpose. Examples include fibers formed of aliphatic polyamides such as nylon; aromatic polyamides such as Kevlar; polyesters such as polyethylene terephthalate, polyethylene naphthalate, polyethylene succinate and polymethyl methacrylate; syndiotactic-1,2-polybutadiene; acrylonitrile-butadiene-styrene copolymer; polystyrene; and copolymers thereof. These may be used singly or in combination of two or more. For example, in the case of using a canvas formed of an organic fiber as the reinforcing member layer, warp and woof yarns of the canvas may be formed of different materials.

The reinforcing member layer may be an untreated organic fiber layer, but adhesiveness is preferably one including on at least a part of its surface, for example, its entire surface, a film containing resorcinol, formaldehyde, a condensate of resorcinol and formaldehyde, and a latex (hereinafter also referred to as "RFL film"), from a viewpoint of improving adhesiveness between the present rubber composition layer and the reinforcing member layer,.

The RFL film may be obtained by, for example, before laminating with the present rubber composition layer, immersing at least a part of the organic fiber, for example, the entire organic fiber, in a liquid containing resorcinol, formaldehyde, a partial condensate of resorcinol and formaldehyde, and a latex (hereinafter also referred to as "RFL dispersion"), and subjecting the same to heat treatment. Moreover, the partial condensate of resorcinol and formaldehyde may be obtained via resolification reaction. From a viewpoint of improving adhesiveness between the present rubber composition layer and the reinforcing member layer, examples of the latex to be contained in the RFL dispersion include vinyl pyridine latex, styrene-butadiene copolymer latex (SBR latex), natural rubber latex, acrylate copolymer based latex, butyl rubber latex, nitrile rubber latex, and chloroprene latex. These may be used singly or in combination of two or more.

When preparing the RFL dispersion, reaction catalysts such as acids and alkalis may be used together if necessary.

A mass ratio of the resorcinol, the formaldehyde, the partial condensate of resorcinol and formaldehyde, to the latex in the RFL dispersion is not specifically limited.

Specifically, the RFL film may be obtained by immersing a part or an entire organic fiber such as a canvas in the aforementioned RFL dispersion, removing extra attached liquid by passing the same between rolls or performing vacuum suction if necessary, and then performing one-phase or multiphase heat treatment.

Here, in order to accelerate the reaction and to reduce heat shrinkage in actual use, a final treatment temperature in the heat treatment is preferably 180°C or higher, particularly preferably 200°C or higher.

### (Rubber layer other than the present rubber composition layer)

Moreover, the disclosed laminated body may include a rubber layer other than the present rubber composition layer on at least one outermost layer depending on the requirement of the desired rubber product. For example, in the case of using the disclosed laminated body to a conveyor belt, the laminated body may include on the outermost layer a rubber layer capable of functioning as a cover rubber. Here, the rubber layer capable of functioning as a cover rubber is not specifically limited. Examples thereof may be obtained by appropriately kneading: a polymer component containing a natural rubber (NR), a butadiene rubber (BR), a styrene-butadiene rubber (SBR), an isoprene rubber (IR), a chloroprene rubber (CR), an ethylene-propylene-dine rubber (EPDM), an acrylonitrile-butadiene rubber (NBR), a butyl rubber (IIR), etc., or a mixture thereof; and a vulcanizing agent such as sulfur, a vulcanization accelerator, a vulcanization accelerator aid such as zinc oxide, a softener, an age resistor, an antiscorching agent, a processing aid, a lubricant, a carbon black, a silica, calcium carbonate a filler modifier, a tackifier, a colorant, etc. depending on the purpose. Examples of the cover rubber include an upper cover rubber and a lower cover rubber, which may be rubber members of either the same type or different types.

In the case where the disclosed laminated body includes on the outermost layer a rubber layer other than the present rubber composition layer, such rubber layer is preferably adjacent on its inner side to the present rubber composition layer.

### (Preparation of laminated body)

The method for laminating the present rubber composition layer, the reinforcing member layer, and optionally a rubber layer other than the present rubber composition layer is not specifically limited, and an ordinary method may be used for laminating.

Here, in the case of laminating with a conventionally known calendering process by using the present rubber composition layer and the reinforcing member layer, a laminated body A may first be manufactured, which includes a rubber composition layer - a reinforcing member layer - a rubber composition layer. This laminated body A may be directly used. Alternatively, two or more of the laminated bodies A may be laminated to one another so as to be used as use a laminated body B, depending on necessary properties of the rubber product such as conveyor belt (namely, the laminated body B will include [a rubber composition layer - a reinforcing member layer - a rubber composition layer - a rubber composition layer - a reinforcing member layer - a rubber composition layer] when formed by stacking two of the laminated bodies A to each other). Furthermore, for example, in manufacture of the conveyor belt, by laminating the aforementioned rubber layer capable of functioning as a cover rubber to the outermost surface of the laminated body A or of the laminated body B with an ordinary method, it is possible to prepare the disclosed laminated body. Examples of the aforementioned laminated body B used in manufacture of the conveyor belt may be obtained by overlapping two to eight laminated bodies A.

The method for adhering the laminated present rubber composition layer and the reinforcing member layer, and optionally the present rubber composition layer and a rubber layer other than the present rubber composition layer, is not specifically limited. Examples thereof include: a method of arranging the laminated rubber composition layer and reinforcing member layer, and optionally a rubber layer other than the present rubber composition layer, in a predetermined mold, and adhering via vulcanization (the so-called vulcanization molding).

The temperature of vulcanization is not specifically limited and may be appropriately selected depending on the purpose, but is preferably in a range of 130°C to 170°C from a viewpoint of sufficiently adhering the present rubber composition layer and the reinforcing member layer to each other, and simultaneously suppressing overvulcanization. Moreover, the vulcanization time is not specifically limited, but is preferably set appropriately so as to sufficiently conduct heat to the center of the laminate to perform vulcanization, in order to sufficiently adhere the present rubber composition layer and the reinforcing member layer to each other.

The laminated body prepared in this way has the present rubber composition layer and the reinforcing member layer, and optionally the present rubber composition layer and a rubber layer other than the present rubber composition layer, which are firmly adhered to each other, and thus is capable of improving the durability of a rubber product when used as a member of the rubber product, and may be preferably used as a member of rubber products required to have high durability, such as tires for automobiles, conveyor belts, and hoses. Such laminated body can be manufactured by using the disclosed rubber composition, and thus has high productivity.

### <Conveyor belt>

The disclosed conveyor belt contains the aforementioned disclosed laminated body. The disclosed conveyor belt is not specifically limited as long as the disclosed laminated body is used therefor.

As mentioned above, in the disclosed conveyor belt, the present rubber composition layer and the reinforcing member, and optionally the present rubber composition layer and a rubber layer other than the present rubber composition layer, are firmly adhered to each other, and thus the disclosed conveyor belt has high durability. Moreover, for the same reason, the disclosed conveyor belt has high reinforcement performance as well. Further, the disclosed conveyor belt can be manufactured by using the disclosed laminated body, and thus has high productivity.

The disclosed conveyor belt has a belt strength of preferably 80 N/mm or more, and preferably 3250 N/mm or less, from a viewpoint of durability, etc.

The "belt strength" of the conveyor belt herein refers to a tensile strength per unit width (unit: N/mm) of the belt main body (exclusive of the endless portion).

The disclosed conveyor belt has a widthwise (minor axis direction) length of preferably 80 mm or more, and preferably 3200 mm or less.

Further, the disclosed conveyor belt has a longitudinal (major axis direction) length of preferably 30 m or more.

### EXAMPLES

The following describes the presently disclosed tire in more detail through examples. However, the presently disclosed tire is not in any way limited by the following examples and suitable alterations may be made that do not change the essence thereof.

### <Preparation of rubber composition>

A Banbury mixer is used to prepare an unvulcanized rubber composition through addition of: a processing aid, a lubricant, sulfur, a vulcanization accelerator and zinc oxide to the formulation as listed in Tables 1 to 4 (unit: parts by mass) at amounts selected according to an ordinary method.

By using the prepared unvulcanized rubber composition, evaluation of vulcanization time and film thickness stability was performed according to the following procedure (evaluation of film thickness stability was performed to only Examples 21 to 24).

### (Measurement of 90% vulcanization time)

A block-shaped unvulcanized rubber composition cut into a weight of 8±1 g was used as a sample. By using this sample, its 90% vulcanization time (tc(90)) at 155°C was determined with a Curelastometer ("CURELASTOMETER7", manufactured by JSR corporation) according to JIS K6300-2 and ISO6502. The vulcanization time was evaluated as follows. A smaller measurement indicates a shorter vulcanization time of the rubber composition.

### -Evaluation of vulcanization time-

More than 7.0 minutes ... poor
5.0 minutes or more and 7.0 minutes or less ... good
Less than 5.0 minutes ... excellent

### (Evaluation of film thickness stability)

An unvulcanized rubber composition in a sheet-like shape with a thickness of 0.7 mm, which was manufactured by using a 6-inch diameter rolling roll (corresponding to the following rubber composition layer mentioned below), was shaped into a shape with a width of 25 cm to 30 cm and a length of 40 cm to 100 cm as a sample. After drawing a square block which is 20 cm on each side centering on a center of this sheet-like sample, each thickness at each apex, midpoints of each side and a central point (9 points in total) of this square block was measured by using a digital thickness gauge ("SMD-550S2-LW", manufactured by Teclock Corporation). Then, differences between maximum values and minimum values of the thickness at the aforementioned 9 points were calculated and evaluated according to the following standard.

Difference between maximum value and minimum value of thickness is less than 0.03 mm ... excellent

Difference between maximum value and minimum value of thickness is 0.03 mm or more and less than 0.06 mm ... good

Difference between maximum value and minimum value of thickness is 0.06 mm or more ... poor

### <Preparation of reinforcing member layer>

A piece of canvas cloth including warp yarns formed of polyethylene terephthalate (number of twist: 16 T/10cm, number of yarn: 83/5cm) and woof yarns formed of nylon (number of twist: 12 T/10cm, number of yarn: 32/5cm) was prepared. On the other hand, resorcinol, formalin, water and an alkaline reaction catalyst, were sequentially mixed and stirred, so as to partially proceed a condensation reaction of resorcinol and formaldehyde, and then an SBR latex, a vinyl pyridine latex and water were mixed and stirred, to thereby prepare an RFL dispersion. Then, the aforementioned piece of canvas cloth was entirely immersed in the RFL dispersion thus obtained. The immersed piece of canvas cloth was subjected to drying and heat treatment until the final treatment temperature fell within a range of 210°C to 240°C, and an "undegraded reinforcing member layer" including an RFL film on its surface was obtained. When forming the RFL film in the undegraded reinforcing member layer, the RFL dispersion was adjusted until a latex concentration in terms of the SBR latex and the vinyl pyridine latex in the RFL film in total became 83 mass%.

Further, an undegraded reinforcing member layer the same as the above was prepared, and was left standing for 60 minutes in an ozone tank at 40°C and an ozone concentration of 50 pphm, to obtain a "degraded reinforcing member layer".

### <Preparation of laminated body sample>

By using the aforementioned unvulcanized rubber composition, a rubber composition layer with a thickness of 0.7 mm was manufactured with a 6-inch diameter rolling roll. Next, by using this rubber composition layer and the aforementioned reinforcing member layer, an unvulcanized laminated body sample of a 7-layer structure of [rubber composition layer A - undegraded reinforcing member layer - rubber composition layer B - undegraded reinforcing member layer - rubber composition layer C - undegraded reinforcing member layer - rubber composition layer D] was prepared. This unvulcanized laminated body sample was vulcanized in a predetermined mold at 148°C for a time that is 1.5 times the t_{c}(90) determined as mentioned above, left to stand overnight at room temperature, so as to to obtain a vulcanized laminated body sample I.

Moreover, with the same method as mentioned below, an unvulcanized laminated body sample of a 7-layer structure of [rubber composition layer A - degraded reinforcing member layer - rubber composition layer B - degraded reinforcing member layer - rubber composition layer C - degraded reinforcing member layer - rubber composition layer D] was prepared, so as to obtain a vulcanized laminated body sample II with the same method as mentioned above.

The aforementioned rubber composition layers A to D were each prepared from a rubber composition of the same type.

By using these laminated body samples I and II, adhesiveness between the rubber composition layers and the reinforcing member layer was evaluated according to the following procedure.

### (Peel test of rubber composition layer and reinforcing member layer)

The aforementioned laminated body sample was cut into a width of 25 mm in the warp direction, and then cuts of 10 mm to 20 mm were opened with a knife on a part of the rubber composition layer B. A peel test was performed with an "Auto Rubber Universal Testing Machin AC-10kN" manufactured by TSE Corporation, in which the sample was peeled off from the cut portions. Here, a peel strength in this test (N/25mm) was measured at a peel angle of 90° and a peel speed of 50 mm/min. Then, adhesiveness and the peel operability of the laminated body samples I and II were evaluated according to the following. Tables 1 to 3 list the results of this evaluation.

### -Evaluation of adhesiveness-

Larger than 100 N/25mm ... excellent
100 to 80 N/25mm ... good
Smaller than 80 N/25mm ... poor

### -Evaluation of peel operability-

300 N/25mm or less ... excellent
Larger than 300 N/25mm ... poor

A rubber amount remaining on the reinforcing member layer after this test (rubber attachment amount) was evaluated according to the method described below. Namely, among the two reinforcing member layers adjacent the peeled rubber composition layer B, with respect to a reinforcing member layer which is judged by observing as having a smaller rubber attachment amount, its rubber attachment surface was imaged as a sample photo. Next, the imaged sample photo was subjected to image thresholding into a rubber component and a reinforcing member layer component and area calculation with an image processing software, where the case in which the rubber remained in an area larger than 60% was evaluated as excellent, the case in which the rubber remained in an area of 60% to 40% as good, and the case in which the rubber remained in an area smaller than 40% as poor. Tables 1 to 3 list the results of this evaluation.

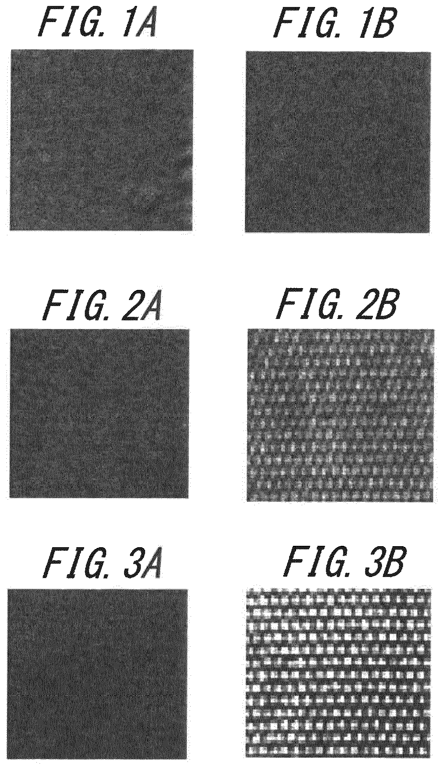

For reference, FIG. 1A illustrates a schematic view of a peeled surface in a test using the laminated body sample I of Example 1, and FIG. 1B illustrates a schematic view of a peeled surface in a test using the laminated body sample II of Example 1. Similarly, FIG. 2A illustrates a schematic view of a peeled surface in a test using the laminated body sample I of Comparative Example 2, and FIG. 2B illustrates a schematic view of a peeled surface in a test using the laminated body sample II of Comparative Example 2. Moreover, similarly, FIG. 3A illustrates a schematic view of a peeled surface in a test using the laminated body sample I of Comparative Example 6, and FIG. 3B illustrates a schematic view of a peeled surface in a test using the laminated body sample II of Comparative Example 6. Here, a darker color of the peeled surface indicates that more rubber composition remained, and indicates excellent adhesiveness without occurrence of interfacial peeling between the rubber composition layer and the reinforcing member layer.

**[Table 1]**

| | | Comparative Example 1 | Comparative Example 2 | Example 1 | Example 2 | Example 3 | Example 4 | Comparative Example 3 | Comparative Example 4 | Comparative Example 5 | Comparative Example 6 |
|---|---|---|---|---|---|---|---|---|---|---|---|
| Natural rubber *1 | | 35 | 35 | 35 | 35 | 35 | 35 | 35 | 35 | 35 | 35 |
| Styrene-butadiene rubber | | 60 | 60 | 60 | 60 | 60 | 60 | 60 | 60 | 60 | 60 |
| Reclaimed rubber *3 | Diene based rubber | 5 | 5 | 5 | 5 | 5 | 5 | 5 | 5 | 5 | 5 |
| | Carbon black | 2.5 | 2.5 | 2.5 | 2.5 | 2.5 | 2.5 | 2.5 | 2.5 | 2.5 | 2.5 |
| | Others | 2.5 | 2.5 | 2.5 | 2.5 | 2.5 | 2.5 | 2.5 | 2.5 | 2.5 | 2.5 |
| Calcium carbonate 1 *4 | | 82 | 82 | 82 | 82 | 82 | 82 | 82 | 82 | 0 | 5 |
| Carbon black 1 *8 | | 44.0 | 42.0 | 41.0 | 40.5 | 39.5 | 39.2 | 39.0 | 38.0 | 40.0 | 40.0 |
| Carbon black 2 *9 | | 0 | 0 | 0 | 0 | 0 | 0 | 0 | 0 | 0 | 0 |
| Carbon black 3 *10 | | 0 | 0 | 0 | 0 | 0 | 0 | 0 | 0 | 0 | 0 |
| Wet silica 1 *11 | | 0 | 2.0 | 3.0 | 3.5 | 4.5 | 4.8 | 5.1 | 6.0 | 4.0 | 4.0 |
| Wet silica 2 *12 | | 0 | 0 | 0 | 0 | 0 | 0 | 0 | 0 | 0 | 0 |
| Wet silica 3 *13 | | 0 | 0 | 0 | 0 | 0 | 0 | 0 | 0 | 0 | 0 |
| Wet silica 4 *14 | | 0 | 0 | 0 | 0 | 0 | 0 | 0 | 0 | 0 | 0 |
| Wet silica 5 *15 | | 0 | 0 | 0 | 0 | 0 | 0 | 0 | 0 | 0 | 0 |
| Wet silica 6 *16 | | 0 | 0 | 0 | 0 | 0 | 0 | 0 | 0 | 0 | 0 |
| Drv silica 1 *17 | | 0 | 0 | 0 | 0 | 0 | 0 | 0 | 0 | 0 | 0 |
| Evaluation of vulcanization time | | Excellent | Excellent | Excellent | Good | Good | Good | Poor | Poor | Good | Good |
| Peel test on rubber composition layer and undegraded reinforcing member layer | Peel strength (N/25mm) | 150 | 153 | 153 | 154 | 158 | 161 | 162 | 165 | 335 | 311 |
| | Evaluation of adhesiveness | Excellent | Excellent | Excellent | Excellent | Excellent | Excellent | Excellent | Excellent | Excellent | Excellent |
| | Evaluation of peel operability | Excellent | Excellent | Excellent | Excellent | Excellent | Excellent | Excellent | Excellent | Poor | Poor |
| | Evaluation of rubber attachment | Excellent | Excellent | Excellent | Excellent | Excellent | Excellent | Excellent | Excellent | Good | Excellent |
| Peel test on rubber composition layer and degraded reinforcing member layer | Peel strength (N/25mm) | 71 | 78 | 112 | 115 | 123 | 126 | 129 | 133 | 305 | 280 |
| | Evaluation of adhesiveness | Poor | Poor | Excellent | Excellent | Excellent | Excellent | Excellent | Excellent | Excellent | Excellent |
| | Evaluation of peel operability | Excellent | Excellent | Excellent | Excellent | Excellent | Excellent | Excellent | Excellent | Poor | Excellent |
| | Evaluation of rubber attachment | Poor | Good | Excellent | Excellent | Excellent | Excellent | Excellent | Excellent | Good | Good |

**[Table 2]**

| | | Example 5 | Example 6 | Example 7 | Example 8 | Comparative Example 7 | Example 9 | Example 10 | Example 11 | Example 12 | Example 13 | Example 14 |
|---|---|---|---|---|---|---|---|---|---|---|---|---|
| Natural rubber *1 | | 35 | 35 | 35 | 35 | 35 | 35 | 35 | 35 | 35 | 35 | 35 |
| Styrene-butadiene rubber | | 60 | 60 | 60 | 60 | 60 | 60 | 60 | 65 | 65 | 65 | 65 |
| Reclaimed rubber *3 | Diene based rubber | 5 | 5 | 5 | 5 | 5 | 5 | 5 | 0 | 0 | 0 | 0 |
| | Carbon black | 2.5 | 2.5 | 2.5 | 2.5 | 2.5 | 2.5 | 2.5 | 0 | 0 | 0 | 0 |
| | Others | 2.5 | 2.5 | 2.5 | 2.5 | 2.5 | 2.5 | 2.5 | 0 | 0 | 0 | 0 |
| Calcium carbonate 1 *4 | | 10 | 20 | 40 | 120 | 140 | 82 | 82 | 82 | 82 | 82 | 10 |
| Carbon black 1 *8 | | 40.0 | 40.0 | 40.0 | 40.0 | 40.0 | 40.0 | 40.0 | 41.0 | 40.5 | 39.2 | 40.0 |
| Carbon black 2 *9 | | 0 | 0 | 0 | 0 | 0 | 0 | 0 | 0 | 0 | 0 | 0 |
| Carbon black 3 *10 | | 0 | 0 | 0 | 0 | 0 | 0 | 0 | 0 | 0 | 0 | 0 |
| Wet silica 1 *11 | | 4.0 | 4.0 | 4.0 | 4.0 | 4.0 | 0 | 0 | 3.0 | 3.5 | 4.8 | 4.0 |
| Wet silica 2 *12 | | 0 | 0 | 0 | 0 | 0 | 4.0 | 0 | 0 | 0 | 0 | 0 |
| Wet silica 3 *13 | | 0 | 0 | 0 | 0 | 0 | 0 | 4.0 | 0 | 0 | 0 | 0 |
| Wet silica 4 *14 | | 0 | 0 | 0 | 0 | 0 | 0 | 0 | 0 | 0 | 0 | 0 |
| Wet silica 5 *15 | | 0 | 0 | 0 | 0 | 0 | 0 | 0 | 0 | 0 | 0 | 0 |
| Wet silica 6 *16 | | 0 | 0 | 0 | 0 | 0 | 0 | 0 | 0 | 0 | 0 | 0 |
| Dry silica 1 *17 | | 0 | 0 | 0 | 0 | 0 | 0 | 0 | 0 | 0 | 0 | 0 |
| Evaluation of vulcanization time | | Good | Good | Good | Good | Good | Good | Good | Excellent | Good | Good | Good |
| Peel test on rubber composition layer and undegraded reinforcing member layer | Peel strength (N/25mm) | 282 | 246 | 169 | 111 | 86 | 150 | 147 | 160 | 160 | 161 | 278 |
| | Evaluation of adhesiveness | Excellent | Excellent | Excellent | Excellent | Good | Excellent | Excellent | Excellent | Excellent | Excellent | Excellent |
| | Evaluation of peel operability | Excellent | Excellent | Excellent | Excellent | Excellent | Excellent | Excellent | Excellent | Excellent | Excellent | Excellent |
| | Evaluation of rubber attachment | Excellent | Excellent | Excellent | Excellent | Excellent | Excellent | Good | Excellent | Excellent | Excellent | Excellent |
| Peel test on rubber composition layer and degraded reinforcing member layer | Peel strength (N/25mm) | 259 | 239 | 168 | 108 | 75 | 123 | 108 | 117 | 125 | 128 | 265 |
| | Evaluation of adhesiveness | Excellent | Excellent | Excellent | Excellent | Poor | Excellent | Excellent | Excellent | Excellent | Excellent | Excellent |
| | Evaluation of peel operability | Excellent | Excellent | Excellent | Excellent | Excellent | Excellent | Excellent | Excellent | Excellent | Excellent | Excellent |
| | Evaluation of rubber attachment | Excellent | Excellent | Excellent | Excellent | Excellent | Good | Good | Excellent | Excellent | Excellent | Excellent |

**[Table 3]**

| | | Example 15 | Comparative Example 8 | Comparative Example 9 | Example 16 | Comparative Example 10 | Example 17 | Example 18 | Example 19 | Example 20 |
|---|---|---|---|---|---|---|---|---|---|---|
| Natural rubber *1 | | 35 | 35 | 35 | 35 | 35 | 35 | 35 | 35 | 35 |
| Styrene-butadiene rubber | | 65 | 60 | 60 | 60 | 60 | 60 | 60 | 60 | 60 |
| Reclaimed rubber *3 | Diene based rubber | 0 | 5 | 5 | 5 | 5 | 5 | 5 | 5 | 5 |
| | Carbon black | 0 | 2.5 | 2.5 | 2.5 | 2.5 | 2.5 | 2.5 | 2.5 | 2.5 |
| | Others | 0 | 2.5 | 2.5 | 2.5 | 2.5 | 2.5 | 2.5 | 2.5 | 2.5 |
| Calcium carbonate 1 *4 | | 120 | 82 | 20 | 20 | 20 | 20 | 82 | 82 | 82 |
| Carbon black 1 *8 | | 40.0 | 40.0 | 0 | 0 | 0 | 0 | 39.5 | 39.5 | 39.5 |
| Carbon black 2 *9 | | 0 | 0 | 44.0 | 40.0 | 0 | 0 | 0 | 0 | 0 |
| Carbon black 3 *10 | | 0 | 0 | 0 | 0 | 44.0 | 40.0 | 0 | 0 | 0 |
| Wet silica 1 *11 | | 4.0 | 0 | 0 | 4.0 | 0 | 4.0 | 0 | 0 | 0 |
| Wet silica 2 *12 | | 0 | 0 | 0 | 0 | 0 | 0 | 0 | 0 | 0 |
| Wet silica 3 *13 | | 0 | 0 | 0 | 0 | 0 | 0 | 0 | 0 | 0 |
| Wet silica 4 *14 | | 0 | 0 | 0 | 0 | 0 | 0 | 4.5 | 0 | 0 |
| Wet silica 5 *15 | | 0 | 0 | 0 | 0 | 0 | 0 | 0 | 4.5 | 0 |
| Wet silica 6 *16 | | 0 | 0 | 0 | 0 | 0 | 0 | 0 | 0 | 4.5 |
| Dry silica 1 *17 | | 0 | 4.0 | 0 | 0 | 0 | 0 | 0 | 0 | 0 |
| Evaluation of vulcanization time | | Good | Excellent | Excellent | Good | Excellent | Good | Good | Good | Good |
| Peel test on rubber composition layer and undegraded reinforcing member laver | Peel strength (N/25mm) | 111 | 150 | 245 | 259 | 310 | 282 | 155 | 151 | 150 |
| | Evaluation of adhesiveness | Excellent | Excellent | Excellent | Excellent | Excellent | Excellent | Excellent | Excellent | Excellent |
| | Evaluation of peel operability | Excellent | Excellent | Excellent | Excellent | Poor | Excellent | Excellent | Excellent | Excellent |
| | Evaluation of rubber attachment | Excellent | Excellent | Excellent | Excellent | Excellent | Excellent | Excellent | Excellent | Excellent |
| Peel test on rubber composition layer and degraded reinforcing member laver | Peel strength (N/25mm) | 108 | 74 | 78 | 168 | 75 | 200 | 119 | 108 | 98 |
| | Evaluation of adhesiveness | Excellent | Poor | Poor | Excellent | Poor | Excellent | Excellent | Excellent | Good |
| | Evaluation of peel operability | Excellent | Excellent | Excellent | Excellent | Excellent | Excellent | Excellent | Excellent | Excellent |
| | Evaluation of rubber attachment | Excellent | Poor | Poor | Excellent | Poor | Excellent | Good | Good | Good |

**[Table 4]**

| | | Example 21 | Example 22 | Example 23 | Example 24 |
|---|---|---|---|---|---|
| Natural rubber *1 | | 35 | 35 | 35 | 35 |
| Styrene-butadiene rubber | | 60 | 60 | 60 | 60 |
| Reclaimed rubber *3 | Diene based rubber | 5 | 5 | 5 | 5 |
| | Carbon black | 2.5 | 2.5 | 2.5 | 2.5 |
| | Others | 2.5 | 2.5 | 2.5 | 2.5 |
| Calcium carbonate 1 *4 | | 82 | 0 | 0 | 0 |
| Calcium carbonate 2 *5 | | 0 | 82 | 0 | 0 |
| Calcium carbonate 3 *6 | | 0 | 0 | 82 | 0 |
| Calcium carbonate 4 *7 | | 0 | 0 | 0 | 82 |
| Carbon black 1 *8 | | 40.0 | 40.0 | 40.0 | 40.0 |
| Carbon black 2 *9 | | 0 | 0 | 0 | 0 |
| Carbon black 3 *10 | | 0 | 0 | 0 | 0 |
| Wet silica 1 *11 | | 4.0 | 4.0 | 4.0 | 4.0 |
| Wet silica 2 *12 | | 0 | 0 | 0 | 0 |
| Wet silica 3 *13 | | 0 | 0 | 0 | 0 |
| Wet silica 4 *14 | | 0 | 0 | 0 | 0 |
| Wet silica 5 *15 | | 0 | 0 | 0 | 0 |
| Wet silica 6 *16 | | 0 | 0 | 0 | 0 |
| Dry silica 1 *17 | | 0 | 0 | 0 | 0 |
| Evaluation of vulcanization time | | Good | Good | Good | Good |
| Evaluation of film thickness stability | | Excellent | Excellent | Good | Excellent |
| Peel test on rubber composition layer and undegraded reinforcing member layer | Peel strength (N/25mm) | 157 | 143 | 166 | 155 |
| | Evaluation of adhesiveness | Excellent | Excellent | Excellent | Excellent |
| | Evaluation of peel operability | Excellent | Excellent | Excellent | Excellent |
| | Evaluation of rubber attachment | Excellent | Excellent | Excellent | Excellent |
| Peel test on rubber composition layer and degraded reinforcing member | Peel strength (N/25mm) | 120 | 107 | 110 | 118 |
| | Evaluation of adhesiveness | Excellent | Excellent | Excellent | Excellent |
| | Evaluation of peel operability | Excellent | Excellent | Excellent | Excellent |
| | Evaluation of rubber attachment | Excellent | Good | Good | Excellent |

| | | | | | |
|---|---|---|---|---|---|
| *1 Natural rubber ... Grade; No. RSS-4 2 Styrene-butadiene rubber ... "TAFDEN 2000R", manufactured by Asahi Kasei Chemicals Corporation, cis-1,4 bond content in butadiene monomer unit: 90% or less *3 Reclaimed rubber ... 50 mass% of diene based rubber, 25 mass% of carbon black, 25 mass% of others (other than rubber component, carbon black, wet silica, calcium carbonate, and dry silica) *4 Calcium carbonate 1 ... "NS#100", manufactured by Nitto Funka Kogyo K.K., average primary particle size: 2.1 µm *5 Calcium carbonate 2 ... "NS#200", manufactured by Nitto Funka Kogyo K.K., average primary particle size: 14.8 µm *6 Calcium carbonate 3 ... "SOFTON 3200", manufactured by Shiraishi Calcium Kaisha, Ltd., average primary particle size: 0.7 µm *7 Calcium carbonate 4 ... "NS#500", manufactured by Nitto Funka Kogyo K.K., average primary particle size: 4.4 µm *8 Carbon black 1 ... "ASAHI#52", manufactured by Asahi Carbon Co., Ltd., nitrogen adsorption BET specific surface area: 28 m²/g *9 Carbon black 2 ... "SHO-BLACK N330", manufactured by Cabot Japan K.K., nitrogen adsorption BET specific surface area: 78 m²/g *10 Carbon black 3 ... "SEAST 6", manufactured by Tokai Carbon Co., Ltd., nitrogen adsorption BET specific surface area: 119 m²/g *11 Wet silica 1 ... "Nipsil AQ", manufactured by Tosoh Silica Corporation, nitrogen adsorption BET specific surface area: 205 m²/g *12 Wet silica 2 ... "Nipsil SS-50F", manufactured by Tosoh Silica Corporation, nitrogen adsorption BET specific surface area: 82 m²/g *13 Wet silica 3 ... "Nipsil SS-70", manufactured by Tosoh Silica Corporation, nitrogen adsorption BET specific surface area: 42 m²/g *14 Wet silica 4 ... "ULTRASIL VN3", manufactured by Evonic Degussa Corporation, nitrogen adsorption BET specific surface area: 175 m²/g *15 Wet silica 5 ... "Nipsil NA", manufactured by Tosoh Silica Corporation, nitrogen adsorption BET specific surface area: 135 m²/g *16 Wet silica 6 ... "Nipsil ER", manufactured by Tosoh Silica Corporation, nitrogen adsorption BET specific surface area: 95 m²/g *17 Dry silica 1 ... "AEROSIL 130", manufactured by Nippon Aerosil Co., Ltd., nitrogen adsorption BET specific surface area: 130 m²/g | | | | | |

According to Tables 1 to 4, the disclosed rubber composition, which is obtainable by compounding a rubber component containing a diene based rubber, a wet silica, a carbon black, and calcium carbonate, where the compounding amount of the wet silica is 3 parts by mass or more and less than 5 parts by mass per 100 parts by mass of the diene based rubber, and the compounding amount of the calcium carbonate is 10 parts by mass or more and 120 parts by mass or less per 100 parts by mass of the diene based rubber, brought a peel strength of 80 N/25mm or more, and had a larger amount of rubber remaining on the reinforcing member layer, in both the peel test of the layer containing this rubber composition and the undegraded reinforcing member layer and the peel test of the layer containing this rubber composition and the degraded reinforcing member layer. Therefore, it is understood that the disclosed rubber composition has excellent adhesiveness to an undegraded reinforcing member and excellent adhesiveness to a reinforcing member in environmental degradation. This fact is clarified as well from the darker color of the peeled surfaces in both FIG. 1A and FIG. 1B (on the other hand, the peeled surfaces in FIG. 2B and FIG. 3B appear lighter). Moreover, as indicated in Tables 1 to 4, in the aforementioned peel test, the disclosed rubber composition has a peel strength of 300 N/25mm or less, and thus has high peel operability with an undegraded reinforcing member and a reinforcing member in environmental degradation. Further, the rubber composition needs a shorter time for vulcanization, which indicates high productivity.

### INDUSTRIAL APPLICABILITY

According to this disclosure, it is possible to provide a rubber composition having excellent adhesiveness to a reinforcing member, particularly a reinforcing member in environmental degradation, and capable of bringing high peeling operability therewith. Moreover, according to this disclosure, it is possible to provide a laminated body using the aforementioned rubber composition and capable of improving durability of a rubber product, and a conveyor belt using the aforementioned laminated body and having high durability.

## Claims

1. A rubber composition obtainable by compounding a rubber component containing a diene based rubber, a wet silica, a carbon black and a calcium carbonate, wherein:
a compounding amount of the wet silica is 3 parts by mass or more and less than 5 parts by mass per 100 parts by mass of the diene based rubber; and
a compounding amount of the calcium carbonate is 10 parts by mass or more and 120 parts by mass or less per 100 parts by mass of the diene based rubber.

2. The rubber composition according to claim 1, wherein:
the compounding amount of the wet silica is 4 parts by mass or more and less than 5 parts by mass per 100 parts by mass of the diene based rubber.

3. The rubber composition according to any one of claims 1 or 2, wherein:
the rubber component contains a natural rubber and a styrene-butadiene rubber.

4. The rubber composition according to claim 3, wherein:
a ratio of a compounding amount of the natural rubber to a total compounding amount of the natural rubber and the styrene-butadiene rubber is 20 mass% or more and 60 mass% or less.

5. The rubber composition according to any one of claims 1 to 4, wherein:
a nitrogen adsorption BET specific surface area of the wet silica is 80 m²/g or more.

6. The rubber composition according to any one of claims 1 to 5, wherein:
the nitrogen adsorption BET specific surface area of the wet silica is more than 200 m²/g.

7. The rubber composition according to any one of claims 1 to 6, wherein:
a nitrogen adsorption BET specific surface area of the carbon black is 8 m²/g or more and 100 m²/g or less.

8. The rubber composition according to any one of claims 1 to 7, wherein:
the rubber composition is used to be arranged between a rubber member and a reinforcing member, or between reinforcing members, to adhere the same.

9. A laminated body obtainable by laminating and adhering a layer containing the rubber composition according to any one of claims 1 to 8 and a reinforcing member layer.

10. A conveyor belt comprising the laminated body according to claim 9.

11. The conveyor belt according to claim 10, having a belt strength of 80 N/mm or more and 3250 N/mm or less.

12. The conveyor belt according to claim 10 or 11, having a widthwise length of 80 mm or more and 3200 mm or less.

13. The conveyor belt according to any one of claims 10 to 12, having a longitudinal length of 30 m or more.
